# EUROPEAN PATENT SPECIFICATION

(11) **EP 2 581 171 B1**
(45) Date of publication and mention of the grant of the patent: **24.07.2019**
(21) Application number: 12187238.6
(22) Date of filing: 04.10.2012
(51) Int. Cl.: B25B 27/00, B29C 70/34

(54) **Method and apparatus for applying a force to a material**
Verfahren und Apparat um eine magnetische Kraft auf ein Material zu übertragen
Procédé et appareil pour appliquer une force magnétique sur un matériau

(30) Priority: 14.10.2011 US 201113273676
(43) Date of publication of application: 17.04.2013
(73) Proprietor: The Boeing Company, Chicago, IL 60606-1596 (US)
(72) Inventor: Grubbs, Christopher Vernon, Spanaway, WA 98387 (US)
(74) Representative: Boult Wade Tennant LLP

(56) References cited:
- EP-A1- 0 282 173
- WO-A1-2010/133917
- WO-A2-2009/118275
- DE-U1- 20 006 554
- FR-A1- 2 874 547
- JP-A- S6 349 273
- JP-A- S6 416 402
- US-B1- 6 941 632

## Description

### FIELD OF THE DISCLOSURE

The invention relates to a method and apparatus for applying a force to a material.

### BACKGROUND OF THE DISCLOSURE

To apply a force to a material a user typically applies a force to the material using a tool. For instance, one method of compressing two-sided adhesive tape between a vacuum bag and a composite layup tool, to seal the vacuum bag to the composite layup tool, utilizes a hand-held, spatula-shaped apparatus. The user moves the hand-held, spatula-shaped apparatus over the vacuum bag applying a user-applied compressive force to force the adhesive tape to compress between the vacuum bag and the composite layup tool thereby sealing the vacuum bag to the composite layup tool. This process requires 11 kilograms (twenty-five pounds) of user-applied compressive force which must be applied around the entire periphery of the composite layup tool which can be 26 meters (eighty-four feet). This process may require substantial time, may increase cost, may result in user-fatigue, or may result in other types of ergonomic issues.

There is a need for an apparatus and method which will resolve one or more issues of the current art.

FR2874547A1 describes a device that has an applying unit articulated on a guiding unit, and including two magnetic wheels to press an adhesive film against a metallic application surface. The wheels are mounted around a rotational axis of a hinge shaft of a support arm of the unit. The wheels are movable between extreme closer and remote positions with respect to a body of the unit, and follow profile of the surface.

JPS6349273 describes a device to adhere a corrosion inhibitive material onto the surface of a steel structure to a uniform thickness by providing projections to both ends of a cylindrical roller magnet and adhering said material to the surface of said structure by magnetic force while maintaining the specified spacing between the steel structure ant roller magnet. The projections are provided to both ends of the cylindrical roller magnet and while the specified spacing between the ocean steel structure and the cylindrical roller magnet is maintained, the rust inhibitive material is adhered under the specified pressure by the magnetic force to the surface of the steel structure at the time of adhering the rust inhibitive material to the steel structure. As a result, the shortening to the operation time, the adhesion of the rust inhibitive material to the uniform thickness and the adhering work to provide the uniform adhesive strength to the structure are permitted.

WO2010/133917 describes a roller apparatus which is used for mounting by applying pressure, and which comprises a body having the parts of stem and shaft, at least one handle fitted over the stem part of the body, and at least one magnetic roller fitted over the shaft part of the body.

WO2009/118275 describes a device for adjusting the gap between a pair of first and second rollers. The gap adjusting device comprising at least one pair of spacing wheels or rollers adapted to engage and rotate with the circumference of the first roller and being connected to the second roller.

DE20006554U1 describes a device for processing printed packaging, or similar substrates.

EP0282173A1 describes a scalp massager that has a main body provided on the rear end thereof with a grip portion, a pair of supporting arms projecting laterally from the main body and spaced from each other in the longitudinal direction of the main body, a roller member rotatably mounted between the arms for rotation about an axis substantially parallel to the longitudinal axis of the main body, the roller member being provided on the outer peripheral surface thereof with a multiplicity of scalp stimulating projections, and compression springs for resiliently biasing the roller member away from the main body. The user grips the grip portion and lightly presses the roller member onto his head, and moves the massager back and forth so that the roller member rolls on the scalp with the result that the projections stimulate blood vessels under the scalp so as to enhance the blood stream. The roller member, which is resiliently urged by the compression springs, can gently and uniformly contact the scalp so as to moderately stimulate the head without any risk for the scalp to be damaged.

JPS6416402A describes a device to increase a magnetic attraction force, by a method wherein, in a title wheel for a running device, e.g. a robot, the thickness on the outer size side of a disc-shaped core situated in a hole for an axle is set to a value higher than that on the inner size side thereof. A thickness (b) on the outer size side of each of disc-shaped cores is set to a value higher than a thickness (a) on the inner side thereof. In this constitution, when the magnetizing direction of a permanent magnet is poles N and S shown in a figure, the flows of the magnetic fluxes of a surface to be attracted, the permanent magnet, and the disc-shaped cores are as shown by an arrow mark. As noted above, in a place near the surface to be attracted, the length of a magnetic pass is decreased, and a magnetic flux is concentrated. Thus, by increasing the thickness of the disc-shaped core on the side near the surface to be attracted, a local magnetic flux is prevented from saturation, a magnetism collection effect is improved, and a magnetic attraction force can be increased.

US6941632B1 describes a variable pressure roller system for installing a preform having contact surfaces onto a configuration of a mold surface by applying pressure thereon. The roller system comprises a roller carriage. A grasping handle may be mounted to the roller carriage. Moreover, the roller system may further comprise a plurality of rollers, wherein each respective one of the plurality of rollers is defined by a weight to generate a specific pressure corresponding thereto. Furthermore, each respective one of the plurality of rollers may be removably engageable to the roller carriage. Each respective one of the plurality of rollers may be adapted to uniformly distribute the specific pressure corresponding thereto on the contact surfaces for conforming the preform to the configuration of the mold surface when engaged to the roller carriage.

### SUMMARY OF THE DISCLOSURE

According to one aspect, there is provided a method for applying a force to a material according to claim 1. According to another aspect, there is also provided an apparatus according to claim 5 for carrying out the method.
The roller comprises a magnet. Advantageously the magnet is rated to produce at least 45 kilograms (100 pounds) of attraction. The roller further comprises a cutting member. Advantageously the roller is made of a non-magnetic material.

Advantageously the roller comprises a cavity and the magnet is disposed within the cavity. Advantageously the roller comprises a groove extending around the roller. Advantageously the magnet is disposed within a cavity of the roller between opposed axles.

According to a further aspect, there is provided an apparatus comprising a handle, a roller, and a magnet.

Advantageously the magnet is disposed within a cavity of the roller. Advantageously the handle is attached to the roller. Advantageously the apparatus further comprises at least one axle, wherein the handle is attached to the at least one axle and the at least one axle is attached to the roller. The roller further comprises a cutting member. Advantageously the magnet is rated to produce at least 45 kilograms (100 pounds) of attraction. Advantageously the roller is made of a non-magnetic material. Advantageously the roller comprises a groove extending around the roller.

According to the present disclosure there is provided, a method of applying a force to a material. In one step, a material is disposed between an apparatus comprising a roller and a magnetically susceptible surface. The roller comprises a magnet. In another step, the roller, comprising the magnet, is rolled over the material with the material disposed between the roller, comprising the magnet, and the magnetically susceptible surface in order to apply a force to the material.

Advantageously the material comprises tape and the magnetically susceptible surface comprises a composite layup tool. The roller additionally comprises a cutting member, and the method further comprises cutting the material with the cutting member. Advantageously the method further comprises aligning the material within a groove of the roller. Advantageously the method further comprises moving the roller with a handle during the rolling.

These and other features, aspects and advantages of the disclosure will become better understood with reference to the following drawings, description and claims.

### BRIEF DESCRIPTION OF THE DRAWINGS

Figure 1 illustrates a front view of one example of an apparatus for applying a force;
Figure 2 illustrates a cross-section view through line 2-2 of the apparatus of Figure 1;
Figure 3 illustrates a side perspective view of the apparatus of Figure 1 in a disassembled state;
Figure 4 illustrates a front view of the apparatus of Figure 1 being used to apply a force to a material;
Figure 5 illustrates a flowchart showing one embodiment of a method of applying a force to a material;
Figure 6 illustrates a front view of another example of an apparatus being used to apply a force to a material; and
Figure 7 illustrates a front view of an embodiment of an apparatus being used to apply a cutting force, applied by a cutting member, to a material.

### DETAILED DESCRIPTION OF THE DISCLOSURE

The following detailed description is of the best currently contemplated modes of carrying out the disclosure. The description is not to be taken in a limiting sense, but is made merely for the purpose of illustrating the embodiments. The scope of the invention is defined by the appended claims.

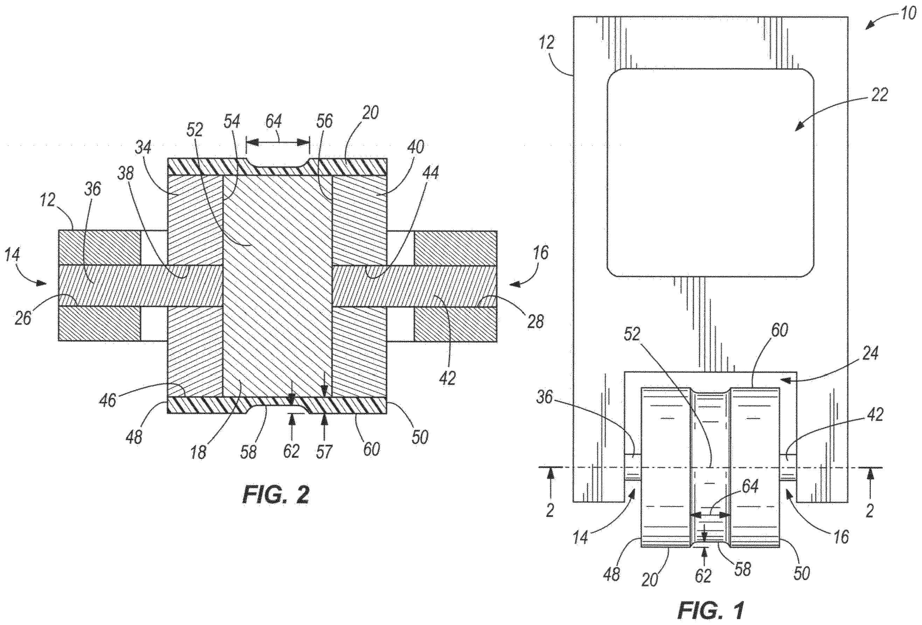

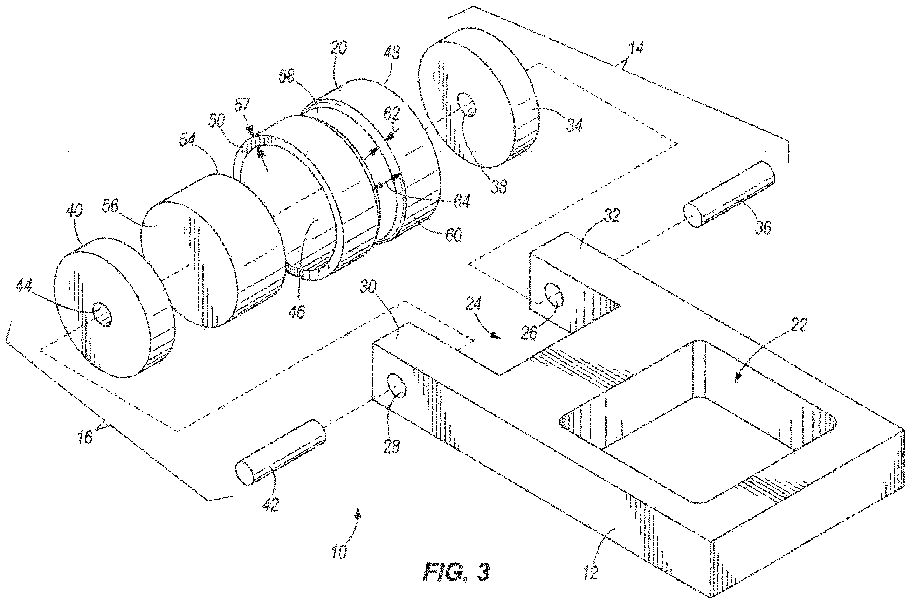

Figure 1 illustrates a front view of one example of an apparatus 10 for applying a force. Figure 2 illustrates a cross-section view through line 2-2 of the apparatus 10 of Figure 1. Figure 3 illustrates a side perspective view of the apparatus 10 of Figure 1 in a disassembled state. As shown collectively in Figures 1, 2, and 3, the apparatus 10 comprises a handle 12, axles 14 and 16, magnet 18, and roller 20. The handle 12 comprises a rectangular opening 22, a U-shaped opening 24, and holes 26 and 28 disposed through opposed portions 30 and 32. The rectangular opening 22 allows a user to insert the user's fingers into the rectangular opening 22 to grip the handle 12. The handle 12 is made of nylon. In other embodiments, the handle 12 may be of varying shapes, configurations, orientations, sizes, or materials.

Axle 14 comprises a hub 34 and a rod 36. The hub 34 is cylindrical with an axial bore 38 extending through the hub 34. The rod 36 has a circular cross-section. The rod 36 fits through hole 26 of the handle 12 into axial bore 38 of the hub 34 to hold the hub 34 in place within the U-shaped opening 24 of the handle 12. The hub 34 and the rod 36 are preferably made of ferromagnetic materials. In other embodiments, the hub 34 and the rod 36 may be of varying shapes, configurations, orientations, sizes, or materials.

Axle 16 comprises a hub 40 and a rod 42. The hub 40 is cylindrical with an axial bore 44 extending through the hub 40. The rod 42 has a circular cross-section. The rod 42 fits through hole 28 of the handle 12 into axial bore 44 of the hub 40 to hold the hub 40 in place within the U-shaped opening 24 of the handle 12 in opposed position to hub 34. The hub 40 and the rod 42 are preferably made of ferromagnetic materials. In other embodiments, the hub 40 and the rod 42 may be of varying shapes, configurations, orientations, sizes, or materials.

Magnet 18 is cylindrical, is a rare-earth Neodymium magnet rated at 59 to 61 kilograms (130 to 135 pounds) of attraction, and is available from Armstrong Magnetics, Inc. as part number 22049 at shown at the following link: http://www.armsmag.com/neodymium_stock_size.htm. In other embodiments, the magnet 18 may be made of varying materials such as Iron, Boron, or other types of materials. In additional embodiments, the magnet 18 may be rated to produce at least 45 kilograms (100 pounds) of attraction. In further embodiments, the magnet 18 may comprise varying types of magnets of varying quantities, shapes, configurations, orientations, sizes, materials, or strengths of the magnetic field.

Roller 20 is cylindrical. A circular cavity 46 extends between opposed ends 48 and 50 of the roller 20. The magnet 18 is fit within the circular cavity 46 of the roller 20 in the center 52 of the cavity 46 between opposed ends 48 and 50 of the roller 20 and between opposed hubs 34 and 40 of the axles 14 and 16. Hub 34 is fixed within circular cavity 46 at end 48 of the roller 20. Hub 40 is fixed within circular cavity 46 at end 50 of the roller 20. Hubs 34 and 40 are abutted against opposed surfaces 54 and 56 of the magnet 18 within the circular cavity 46 of the roller 20. In such manner, the roller 20 is held in place within the U-shaped opening 24 of the handle 12 by the attached hubs 34 and 40 which are held in place by the attached rods 36 and 42 extending through the holes 26 and 28 of the handle 12.

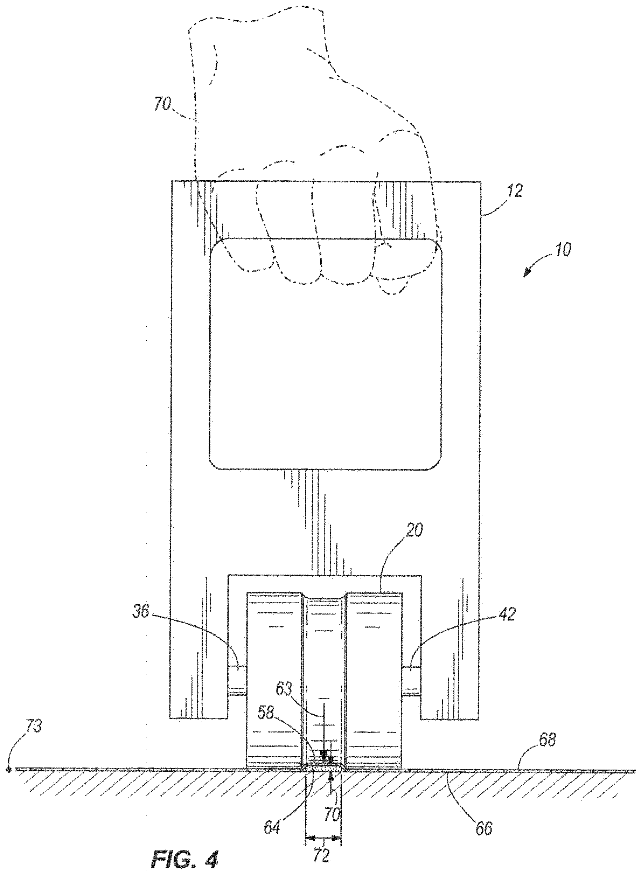

The roller 20 has a wall thickness 57. The wall thickness 57 may be selected to control the amount of force 63 (discussed below in Figure 4) the magnet 18 applies to a magnetically susceptible surface 66 (discussed below in Figure 4). The larger the wall thickness 57, the more force 63 (discussed below in Figure 4) is applied to the magnetically susceptible surface 66 (discussed below in Figure 4) due to the separation distance between the magnet 18 and the magnetically susceptible surface 66 (discussed below in Figure 4) increasing. In other embodiments, other means may be used to control the separation distance between the magnet 18 and the magnetically susceptible surface 66 (see Figure 4) such as a ratcheting mechanism to move the magnet 18 relative to the magnetically susceptible surface 66 (see Figure 4) or other types of moving mechanisms to change their relative location.

An optional groove 58, centered at center 52 of the cavity 46, extends around an outer surface 60 of the roller 20. The groove 58 may have a depth 62 of 1.9 millimeters (.075 inches) and a width 64 of 15 millimeters (.600 inches). The roller 20 may be non-magnetic and may be made of nylon. In other embodiments, the roller 20, including the cavity 46 and the groove 58, may be of varying shape, configuration, orientation, size, or material. In further embodiments, the apparatus 10 may be of varying shape, configuration, orientation, size, or materials. For instance, in one alternative embodiment the magnet 18 could have an axial bore extending through the magnet 18, and the rods 36 and 42 could be replaced with a single rod.

Figure 4 illustrates a front view of the apparatus 10 of Figure 1 being used to apply a force 63 to a material 64. The force 63 may comprise a compressive force. The material 64 comprises two-sided adhesive tape. The material 64 is disposed on and against a magnetically susceptible surface 66. The magnetically susceptible surface 66 may comprise a composite layup tool made of Invar. The magnetically susceptible surface 66 may have a non-magnetically susceptible layer or coating. Member 68 is disposed over and against material 64 and over and against magnetically susceptible surface 66 with the material 64 being disposed between the magnetically susceptible surface 66 and member 68. Member 68 comprises a vacuum bag. The roller 20 is disposed against member 68 over each of member 68, material 64, and magnetically susceptible surface 66. The material 64 is disposed partially within groove 58 of the roller 20. The material 64 has a depth 70 of 6.4 millimeters (.250 inches) and a width 72 of 13 millimeters (.500 inches). The groove 58 helps a user 70, gripping the handle 12 of the apparatus 10 and moving the apparatus 10 to rotate/roll the roller 20 over a length 73 (aligned perpendicular to the page) of the member 68, the material 64, and the magnetically susceptible surface 66, keep the roller 20 aligned on the material 64 to apply the force 63 to the member 68, material 64, and magnetically susceptible surface 66.

As the roller 20 rotates against the member 68 over the member 68, the material 64, and the magnetically susceptible surface 66, the magnet 18 (see Figure 2), which is centered within the cavity 46 (see Figure 2) of the roller 20, attracts the magnetically susceptible surface 66 towards the magnet 18 (see Figure 2) as a result of the magnetic field of the magnet 18 (see Figure 2). The magnetic hubs 34 and 40 (see Figure 2) and magnetic rods 36 and 42 of the magnetic axles 14 and 16 (see Figure 2) may act with the magnet 18 (see Figure 2) to help direct the magnetic field. This magnetic force compresses the material 64 between the member 68 and the magnetically susceptible surface 66 to adhere the material 64 to both the member 68 and the magnetically susceptible surface 66 thereby sealing the member 68 to the magnetically susceptible surface 66. Due to the magnetic force, the user 70 only needs to apply 2.3 kilograms (five pounds) of force to move/push/pull the roller 20 over the member 68, the material 64, and the magnetically susceptible surface 66 to compress the material 64 between the member 68 and the magnetically susceptible surface 66. The 2.3 kilograms (five pound) of force required by the user 70 with the magnetic force of the apparatus 10 is eighty percent less than the force which the user 70 would need to apply without the magnetic force of the apparatus 10. In other embodiments, the apparatus 10 may apply varying magnetic forces with the user 70 applying varying corresponding user-applied forces to compress the material 64 between the member 68 and the magnetically susceptible surface 66. In still other embodiments, the material 64, magnetically susceptible surface 66, and member 68 may vary in type, shape, configuration, orientation, size, or material.

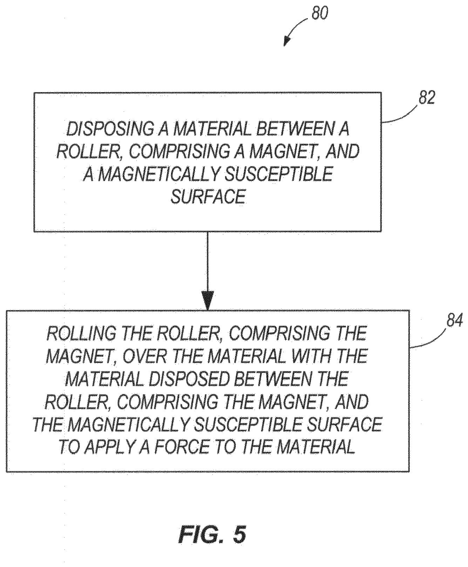

Figure 5 illustrates a flowchart showing one embodiment of a method 80 of applying a force to a material. In step 82, a material is disposed between a roller, comprising a magnet, and a magnetically susceptible surface. The material may comprise tape or another type of material. The magnetically susceptible surface may comprise a composite layup tool or another type of surface. In one embodiment, step 82 may further comprise aligning the material within a groove of the roller. In step 84, the roller, comprising the magnet, is rolled over the material with the material disposed between the roller, comprising the magnet, and the magnetically susceptible in order to apply a force to the material. The applied force comprises a cutting force and may comprise a compressive force or another type of force. In one embodiment, step 84 may further comprise moving/pushing the roller with a handle to roll the roller over the material.

In another embodiment, step 82 may comprise disposing tape between a vacuum bag and a composite layup tool, and step 84 may comprise rolling the roller, comprising the magnet, over the vacuum bag, the tape, and the composite layup tool to seal the vacuum bag to the composite layup tool with the tape. An additional step comprises cutting the material with a cutting member of the apparatus.

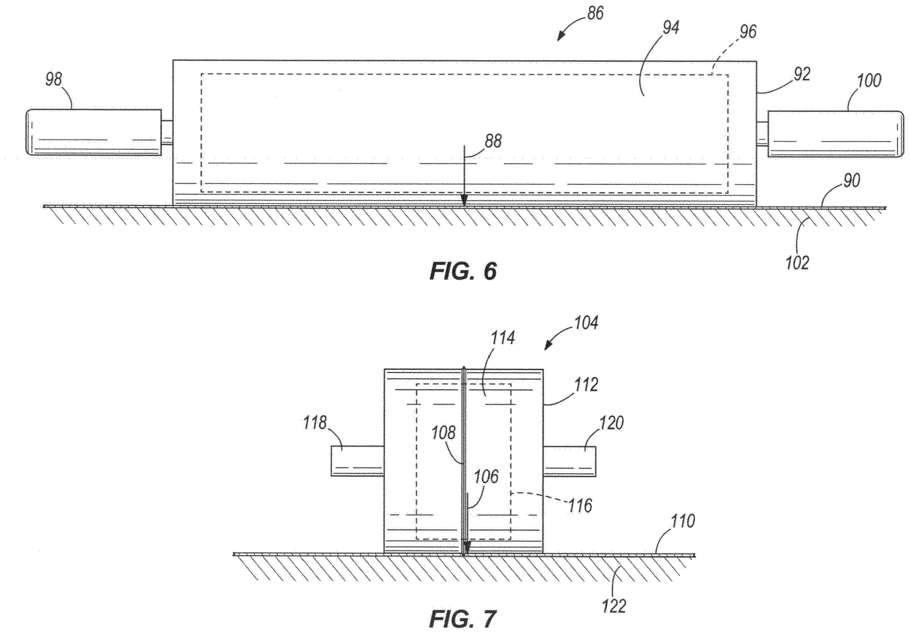

Figure 6 illustrates a front view of an example of an apparatus 86 being used to apply a force 88 to a material 90. The force may comprise a compressive force. The apparatus 86 comprises a roller 92 with a magnet 94 disposed within a cavity 96 of the roller 92. The apparatus 86 optionally comprises opposed handles 98 and 100 for rolling the roller 92 over the material 90 disposed on a magnetically susceptible surface 102. The attraction of the magnetically susceptible surface 102 to the magnet 94 causes the roller 92 to apply the force 88 to the material 90. In one embodiment, the apparatus 86 may comprise a kitchen rolling pin to roll out a material 90 such as dough on a magnetically susceptible surface 102 comprising a bread board. In other embodiments, the apparatus 86 and the magnetically susceptible surface 102 may be used to apply forces to differing types of material to serve differing functions.

Figure 7 illustrates a front view of an embodiment of an apparatus 104 being used to apply a cutting force 106, applied by a cutting member 108, to a material 110. The apparatus 104 comprises a roller 112 with a magnet 114 disposed within a cavity 116 of the roller 112. The cutting member 108 is attached to the roller 112 and may comprise any number of blades or other types of cutting members. The apparatus 104 optionally comprises opposed handles 118 and 120 for rolling the roller 112 over the material 110 disposed on a magnetically susceptible surface 122. The attraction of the magnetically susceptible surface
122 to the magnet 114 causes the roller 112 to apply the cutting force 106 to the material 110. The apparatus 104 may be used to cut any type of material 110. In other embodiments, the apparatus 104, including the cutting member 108, and the magnetically susceptible surface 122 may vary in number, shape, size, configuration, orientation, or materials. For instance, in one embodiment, the cutting member 108 may vary in quantity and be attached to any portion of the roller 112. In still other embodiments, the apparatus 104 and the magnetically susceptible surface 122 may be used for differing functions.

One or more embodiments of the disclosure may reduce or eliminate one or more issues experienced by current apparatus for applying forces to materials. For instance, one or more embodiments of the disclosure may save time, may save cost, may reduce user-fatigue, or may result in other types of ergonomic advantages.

It should be understood, of course, that the foregoing relates to exemplary embodiments and that modifications may be made without departing from the scope of the invention as set forth in the following claims.

## Claims

1. A method of applying a force (63) to a material (64) comprising:
disposing a material (64) between an apparatus (10) comprising a roller (20) and a magnetically susceptible surface (66), wherein the roller (20) comprises a magnet (18),
**characterized in that**
the roller (20) further comprises a cutting member (108) and
the method further comprises the steps of;
rolling the roller (20), comprising the magnet (18), over the material (64) with the material (64) disposed between the roller (20), comprising the magnet (18), and the magnetically susceptible surface (66) in order to apply a force (63) to the material (64); and
cutting the material (64) with the cutting member (108).

2. The method of claim 1 wherein the material (64) comprises tape and the magnetically susceptible surface (66) comprises a composite layup tool.

3. The method of claim 1 or 2 further comprising aligning the material (64) within a groove (58) of the roller (20).

4. The method of any one of claims 1-3 further comprising moving the roller (20) with a handle (12) during the rolling.

5. An apparatus for carrying out the method of any preceding claim, the apparatus comprising:
a roller (20) comprising a magnet (18),
**characterized in that** the roller (20) further comprises a cutting member (108).

6. The apparatus of claim 5 wherein the magnet (18) is rated to produce at least 45 kilograms (100 pounds) of attraction.

7. The apparatus of claim 5 or 6 wherein the roller (20) is made of a non-magnetic material.

8. The apparatus of any one of claims 5-7 wherein the roller (20) comprises a cavity (46) and the magnet (18) is disposed within the cavity (46).

9. The apparatus of any one of claims 5-8 wherein the roller (20) comprises a groove (58) extending around the roller (20).

10. The apparatus of claim 8 wherein the magnet (18) is disposed within the cavity (46) of the roller (20) between opposed axles (14, 16).

## Patentansprüche

1. Verfahren zum Aufbringen einer Kraft (63) auf ein Material (64), mit den Schritten:
Anordnen eines Materials (64) zwischen einer Vorrichtung (10), die eine Rolle (20) und eine magnetisch empfindliche Oberfläche (66) umfasst, wobei die Rolle (20) einen Magneten (18) aufweist:
**dadurch gekennzeichnet, dass**
die Rolle (20) ferner ein Schneidelement (108) umfasst und
das Verfahren ferner die Schritte umfasst:
Rollen der den Magneten (18) aufweisenden Rolle (20) über das Material (64), wobei das Material (64) zwischen der den Magneten (18) aufweisenden Rolle (20) und der magnetisch empfindlichen Oberfläche (66) angeordnet ist, um eine Kraft (63) auf das Material (64) auszuüben; und
Schneiden des Materials (64) mit dem Schneidelement (108).

2. Verfahren nach Anspruch 1, bei dem das Material (64) ein Band umfasst und die magnetisch empfindliche Oberfläche (66) ein Verbundlegewerkzeug umfasst.

3. Verfahren nach Anspruch 1 oder 2, das ferner das Ausrichten des Materials (64) innerhalb einer Nut (58) der Rolle (20) umfasst.

4. Verfahren nach einem der Ansprüche 1-3, das ferner das Bewegen der Rolle (20) mit einem Griff (12) während des Rollens umfasst.

5. Vorrichtung zur Durchführung des Verfahrens nach einem der vorhergehenden Ansprüche, wobei die Vorrichtung umfasst:
eine Rolle (20), die einen Magneten (18) aufweist,
**dadurch gekennzeichnet, dass** die Rolle (20) ferner ein Schneidelement (108) aufweist.

6. Vorrichtung nach Anspruch 5, bei der der Magnet (18) ausgelegt ist, um mindestens 45 Kilogramm (100 Pfund) Anziehungskraft zu erzeugen.

7. Vorrichtung nach Anspruch 5 oder 6, bei der die Rolle (20) aus einem nichtmagnetischen Material hergestellt ist.

8. Vorrichtung nach einem der Ansprüche 5-7, bei der die Rolle (20) einen Hohlraum (46) umfasst und der Magnet (18) innerhalb des Hohlraums (46) angeordnet ist.

9. Vorrichtung nach einem der Ansprüche 5-8, bei der die Rolle (20) eine Nut (58) umfasst, die sich um die Rolle (20) herum erstreckt.

10. Vorrichtung nach Anspruch 8, bei der der Magnet (18) innerhalb des Hohlraums (46) der Rolle (20) zwischen gegenüberliegenden Achsen (14, 16) angeordnet ist.

## Revendications

1. Procédé d'application d'une force (63) à un matériau (64), comprenant l'étape consistant à :
disposer un matériau (64) entre un appareil (10) comprenant un rouleau (20) et une surface magnétiquement sensible (66), dans lequel le rouleau (20) comprend un aimant (18)
**caractérisé en ce que**
le rouleau (20) comprend en outre un élément coupant (108) et
le procédé comprend en outre les étapes consistant à faire rouler le rouleau (20), comprenant l'aimant (18), sur le matériau (64), le matériau (64) étant disposé entre le rouleau (20), comprenant l'aimant (18), et la surface magnétiquement sensible (66) pour appliquer une force (63) au matériau (64) ; et
couper le matériau (64) à l'aide de l'élément coupant (108).

2. Procédé selon la revendication 1, dans lequel le matériau (64) comprend un ruban et la surface magnétiquement sensible (66) comprend un outil de superposition composite.

3. Procédé selon la revendication 1 ou 2, comprenant en outre l'alignement du matériau (64) dans une rainure (58) du rouleau (20).

4. Procédé selon l'une quelconque des revendications 1 à 3, comprenant en outre le déplacement du rouleau (20) avec une poignée (12) pendant le roulement.

5. Appareil pour la mise en oeuvre du procédé selon l'une quelconque des revendications précédentes, l'appareil comprenant :
un rouleau (20) comprenant un aimant (18),
**caractérisé en ce que** le rouleau (20) comprend en outre un élément coupant (108).

6. Appareil selon la revendication 5, dans lequel l'aimant (18) est prévu pour produire au moins 45 kilogrammes (100 livres) d'attraction.

7. Appareil selon la revendication 5 ou 6, dans lequel le rouleau (20) est constitué d'un matériau non magnétique.

8. Appareil selon l'une quelconque des revendications 5 à 7, dans lequel le rouleau (20) comprend une cavité (46) et l'aimant (18) est disposé à l'intérieur de la cavité (46).

9. Appareil selon l'une quelconque des revendications 5 à 8, dans lequel le rouleau (20) comprend une rainure (58) s'étendant autour du rouleau (20).

10. Appareil selon la revendication 8, dans lequel l'aimant (18) est disposé à l'intérieur de la cavité (46) du rouleau (20) entre des axes opposés (14, 16).
